# EUROPÄISCHE PATENTSCHRIFT

(11) **EP 3 164 554 B1**
(45) Veröffentlichungstag und Bekanntmachung des Hinweises auf die Patenterteilung: **08.01.2020**
(21) Anmeldenummer: 15732722.2
(22) Anmeldetag: 01.07.2015
(51) Int. Cl.: E04D 5/10, E04D 5/12, E04D 7/00

(54) **DACHBESCHICHTUNGSSYSTEM**
ROOF COATING SYSTEM
SYSTÈME DE REVÊTEMENT DE TOIT

(30) Priorität: 01.07.2014 EP 14175155
(43) Veröffentlichungstag der Anmeldung: 10.05.2017
(73) Patentinhaber: Amberger Kaolinwerke Eduard Kick GmbH & Co. KG, 92242 Hirschau (DE)
(72) Erfinder: HOFMANN, Hans-Jürgen, 92546 Rottendorf (DE); KOHL, Christian, 92224 Amberg (DE)
(74) Vertreter: dompatent von Kreisler Selting Werner - Partnerschaft von Patent- und Rechtsanwälten mbB
(86) Internationale Anmeldenummer: PCT/EP2015/064983
(87) Internationale Veröffentlichungsnummer: WO 2016/001303

(56) Entgegenhaltungen:
- WO-A1-2013/192336
- US-A1- 2005 072 114
- US-A1- 2011 081 537
- US-A1- 2011 086 201

## Beschreibung

Gegenstand der vorliegenden Erfindung ist eine Dachbeschichtung.

Bitumenbeschichtungen sind in vielen Ländern, insbesondere in USA und Kanada als Dachbeschichtungen gebräuchlich. In vielen Fällen kommen dabei Bitumenschindeln zum Einsatz.

Entsprechende Dachbeschichtungen sind schwarz und weisen daher eine sehr geringe Reflektion der Sonneneinstrahlung (solare Reflektion) auf.

Es ist bekannt, entsprechende Bitumenbeschichtungen mit Granulaten zu versehen, die unter anderem die solare Reflektion erhöhen. Beispielsweise ist in Kalifornien vorgeschrieben, dass entsprechende Materialien eine solare Reflektion von mindestens 70% aufweisen müssen. Eine hohe Reflektion spart in warmen Monaten oder Regionen Klimatisierungskosten des Gebäudes.

WO 2011/041033 betrifft ein Dachbeschichtungssystem, bei dem kalzinierte Kaolinpartikel verwendet werden, um eine solare Reflektion von wenigstens 70% zu erreichen. Die Herstellung des entsprechend kalzinierten Kaolins ist aufwendig und energieintensiv.

WO 2013/192336 A1 betrifft gebrannte Materialien enthaltend 40 bis 80 Gew.-% Kaolin, 0 bis 40 Gew.-% Silica sowie 10 bis 40 Gew.-% Sinterungshilfsmittel, von denen bis zu 25 Gew.-% - bezogen auf die gesamten Rohmaterialien - Feldspat sein können. Die Materialien sind hochporös.

Es ist auch schon versucht worden, Gesteinskörnungen aufzubringen. Während diese in der Herstellung relativ kostengünstig sind, erreicht die solare Reflektion nicht die erwünschten Werte.

Weiterhin ist zu beachten, dass viele der Dachbeschichtungssysteme dazu neigen, im Laufe der Zeit ihre solare Reflektion zu verändern. Dies geschieht insbesondere, wenn im Laufe von Alterungsprozessen die eingebetteten Partikel durch Bitumen verschmutzen und sich damit ihre solare Reflektion verschlechtert.

Aufgabe der vorliegenden Erfindung war es, Dachbeschichtungssysteme bereitzustellen, die zumindest einige der Nachteile des Standes der Technik überwinden.

Gelöst wird die Aufgabe in einer Ausführungsform durch eine Dachbeschichtung mit dem Merkmal des Anspruchs 1. In Ausführungsformen umfasst die Dachbeschichtung eine Bitumenschicht mit eingebetteten Partikeln, wobei die Partikel mit einem fluorhaltigen Polymer beschichtet sind.

Erfindungsgemäß wird also eine Dachbeschichtung bereitgestellt, die eine Bitumenschicht umfasst. In diese Bitumenschicht sind Partikel eingebettet und diese Partikel sind ggf. mit einem fluorhaltigen Polymer beschichtet.

Bevorzugt handelt es sich bei dem fluorhaltigen Polymer um ein thermoplastisches Fluorpolymer, wobei Methacrylate und Acrylate besonders bevorzugt sind. Auch fluorierte Siloxane sind besonders geeignet.

Die Menge an fluorhaltigem Polymer, bezogen auf das Gewicht der Partikel, liegt vorzugsweise im Bereich von 0,1 bis 2,0 Gew.-%.

Grundsätzlich ist bevorzugt, dass die Dachbeschichtung nur die erfindungsgemäß verwendeten Partikel umfasst. Es mag Anwendungsfälle geben, bei denen geringe Mengen anderer Partikel in der Dachbeschichtung enthalten sind.

Bevorzugt beträgt der Anteil der erfindungsgemäßen Partikel mindestens 50 Gew.-%, noch mehr bevorzugt 70 Gew.-% oder 90 Gew.-%.

Als Tonminerale eignen sich insbesondere Kaolin, Dickit, Halloysit und Vermicullit und verwandte Minerale. Bevorzugt bestehen die Tonminerale zu mindestens 50 Gew.-% aus Kaolin.

Bevorzugt liegt die Menge an Tonmineralen in der zu brennenden Mischung bei 45 Gew.-% oder mehr. Bevorzugt beträgt die Menge an Tonmineralen 65 Gew.-% oder weniger oder 60 Gew.-% oder weniger.

Bevorzugt wird ein Tonmineral verwendet, das einen geringen Gehalt an Eisen enthält, insbesondere weniger als 1 Gew.-% bezogen auf die Tonminerale, weiterbevorzugt weniger als 0,5 Gew.-% bezogen auf die Tonminerale. Gemessen wird der Eisengehalt als Fe₂O₃.

Als kristalline Kieselsäuren eignen sich insbesondere Quarz, Cristobalit, Tridymit und verwendete Minerale. Die Verwendung von Quarz ist besonders bevorzugt. Bevorzugt liegt der Anteil an Quarz in den kristallinen Kieselsäuren bei mindestens 50 Gew.-%.

Bevorzugt beträgt die Menge an kristallinen Kieselsäuren 5 Gew.-% oder mehr oder 9 Gew.-% oder mehr. Bevorzugt liegt die Menge an kristallinen

Kieselsäuren bei 30 Gew.-% oder weniger, bei 25 Gew.-% oder weniger oder bei 18 Gew.-% oder weniger.

Die Menge an Feldspat beträgt bevorzugt 28 Gew.,-% oder mehr oder 31 Gew.-% oder mehr. Bevorzugt liegt die Menge an Feldspat bei 40 Gew.-% oder weniger.

In einer bevorzugten Ausführungsform wird eine Mischung gebrannt, die
- 45 bis 65 Gew.-% Tonminerale
- 5 bis 18 Gew.-% kristalline Kieselsäuren
- 28 bis 40 Gew.-% Feldspat
- 0 bis 10 Gew.-% sonstige Zuschlagsstoffe
enthält.

Als sonstige Zuschlagsstoffe eignen sich insbesondere Tonerde (Al₂O₃), Gerüstsilikate, die keine Feldspate sind, Schichtsilikate, die keine Tonminerale sind.

Bevorzugt beträgt die Menge an sonstigen Zuschlagsstoffen mindestens 1 Gew.-%. Bevorzugt beträgt die Menge an sonstigen Zuschlagsstoffen 10 Gew.-% oder weniger.

Die erfindungsgemäßen gebrannten Mischungen können bei Temperaturen von etwa 1150°C gebrannt werden, während die Kalzinierung von Kaolin etwa bei 1380°C erfolgt. Dies bringt eine signifikante Energieeinsparung.

Die relevante Mischung weist nach dem Brennen eine offene Porosität von 0 bis 14 Vol.-%, 2 bis 14 Vol.-%, vorzugsweise 4 bis 10 Vol.-% auf. Die Porosität wird gemessen gemäß DIN EN 993-1 "Prüfverfahren für dichte, geformte feuerfeste Erzeugnisse - Teil 1: Bestimmung der Rohdichte, offenen Porosität und Gesamtporosität".

Grundsätzlich erhöht eine poröse Struktur die Lichtstreuung und führt damit zu einer höheren solaren Reflexion. Die oben genannte WO 2013/192336 offenbart für eine Verbesserung der Reflexion eine Porosität im Bereich von 20 bis 50% gemessen als Quecksilber-Porosimetrie. Überraschenderweise erhöht dies aber die Anfälligkeit für eine Verschmutzung in Kontakt mit dem Bitumen, d.h. über einen Anwendungszeitraum von einigen Jahren verfärbt sich die Oberfläche entsprechender Produkte und führt dann zu einer starken Verringerung der solaren Reflexion. Überraschenderweise können verbesserte Produkte durch eine verringerte Porosität erhalten werden. Dies kann erreicht werden, in dem der Feldspatgehalt in der Mischung erhöht wird.

In einigen Ausführungsformen können die gebrannten Partikel eine Partikelbeschichtung aufweisen. Insbesondere eignen sich für die Partikelbeschichtung siliziumhaltige Verbindungen, fluorhaltige Verbindungen, silizium-fluorhaltige Verbindungen und Mischungen davon. Hierbei ist die Verwendung von fluorhaltigen Verbindungen besonders bevorzugt, wobei die fluorhaltigen Verbindungen bevorzugt thermoplastische Fluorpolymere wie fluorhaltige Methacrylate und Acrylate oder fluorierte Siloxane sind.

Es hat sich gezeigt, dass eine Partikelgröße im Bereich von 0,1 bis 3 mm (gemessen als d50) besonders geeignet ist; d50 bedeutet die Korngröße, bei der 50 Gew.-% der Partikel eine größere Korngröße aufweisen und 50 Gew.-% eine kleinere Korngröße aufweisen. Solche Korngrößenverteilungen können in einfacher Weise durch Sieblinien, bestimmt nach DIN 66165 Teil 1 "Siebanalyse - Grundlagen" und DIN 66165 Teil 2 "Siebanalyse - Durchführung" ermittelt werden.

Eine Menge von etwa 0,5 bis 5 kg Partikel pro m² Dachbeschichtung haben sich als geeignet erwiesen. Bevorzugt weist die erfindungsgemäße Dachbeschichtung eine solare Reflektion von mindestens 80% auf. Diese wird gemessen nach ASTM Standard C1549 "standard test method for determination of solar reflection near ambient temperature using a portable solar reflectometer".

Gegenstand der Erfindung ist weiterhin die Verwendung von Partikeln, ausgewählt aus Partikeln, die gebrannte Mischungen von
- 40 bis 70 Gew.-% Tonminerale
- 0 bis 32 Gew.-% kristalline Kieselsäuren
- 28 bis 45 Gew.-% Feldspat
- 0 bis 15 Gew.-% sonstige Zuschlagsstoffe
sind, zur Beschichtung von Bitumenprodukten für Dachabdeckungen.Eingebettet bedeutet, dass die Partikel fest mit der Bitumenschicht verbunden sind, so dass die Partikel einer erfindungsgemäßen Dachbeschichtung bei 25°C der Schwerkraft widerstehen und eingebettet bleiben. Auf der anderen Seite müssen die Partikel teilweise freiliegen, um ihre Aufgabe der solaren Reflektion zu erfüllen. Bevorzugt sind mindestens 50 % der Partikeloberfläche nicht mit Bitumen beschichtet.

Die erfindungsgemäßen Partikel zeigen eine verbesserte Alterungsbeständigkeit, weil Bitumen die Oberfläche nicht benetzt und die Partikel freiliegen. Auf der anderen Seite wird überraschenderweise die Anhaftung an das Bitumen nicht so weit gestört, dass die Partikel beispielsweise durch Schwerkraft oder Wind von der Dachbeschichtung gelöst werden können.

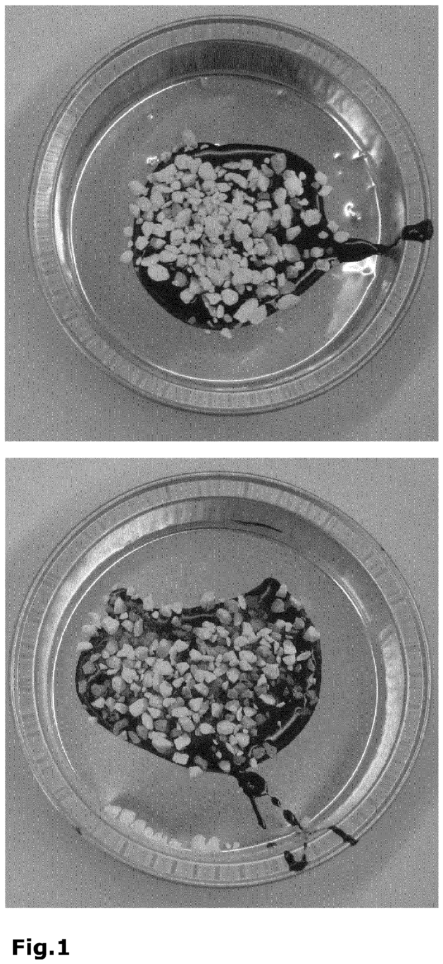

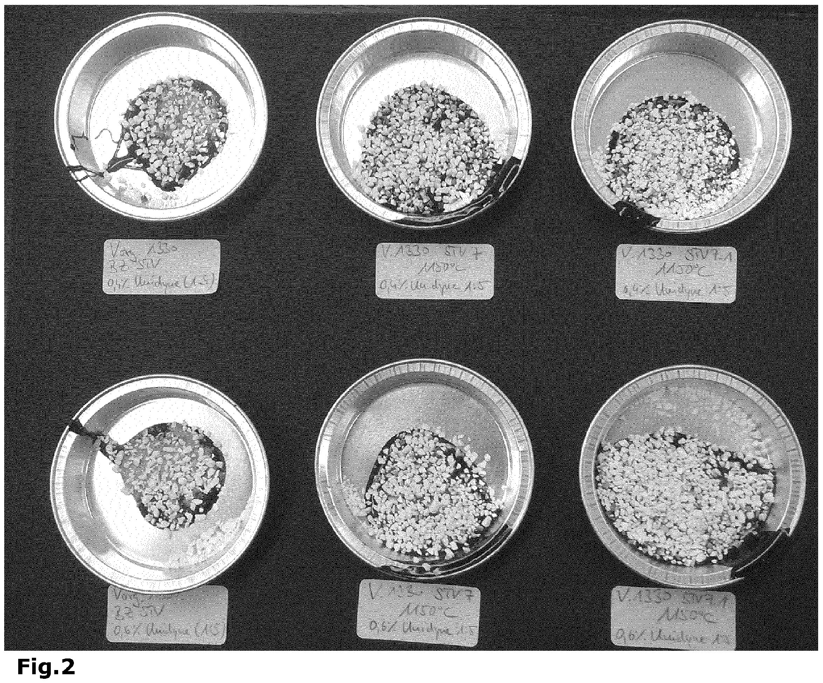

Die Figuren 1 und 2 zeigen Ausführungsformen nach einem Verschmutzungstest.

Die Erfindung wird durch die nachfolgenden Beispiele näher erläutert:

### Beispiel 1: Herstellung

Es wurden folgende Partikel hergestellt:

| | Probe 1 | Probe 2 | Probe 3 |
|---|---|---|---|
| Kaolin | 59,88 Gew.-% | 49 Gew.-% | 46,6 Gew.-% |
| Quarzmehl | 8,97 Gew.-% | 16 Gew.-% | 15,1 Gew.-% |
| Feldspat | 31,15 Gew.-% | 35 Gew.-% | 33,3 Gew.-% |
| Aluminiumoxid | - | - | 5,0 Gew.-% |

Alle drei Proben wurden oxidierend bei 1150°C gebrannt und anschließend auf eine Korngröße d50 von 1 mm gebrochen.

### Beispiel 2: Wasseraufnahme

Die Proben wurden exakt eingewogen und in Bechergläsern mit einem großen Überschuss Wasser getränkt. Nach 60 min. bei 25°C wurden die Partikel abfiltriert, vorsichtig abgetupft und erneut gewogen.

Die Proben zeigten folgende Wasseraufnahme:

| Probe 1 | Probe 2 | Probe 3 |
|---|---|---|
| 10,2 Gew.-% | 8,4 Gew.-% | 9,4 Gew.-% |

### Beispiel 3: Solare Reflektion

Mittels eines Reflektometers "SSR-ER" der Firma Devices and Services Co, Dallas, Texas wird die totale solare Reflektion für einen Einfallswinkel von 20 ° gegen die Senkrechte gemessen. Hierzu wird eine repräsentative und ausreichend große Teilmenge der zu messenden Probe entnommen. Eine Probenschale mit einem Durchmesser von 55 mm wird 10 mm hoch mit der Probe befüllt, die Oberfläche wird mit einem Spatel geglättet. Der solare Reflektionswert wird als Mittelwert von fünf Messungen angegeben. Die Partikel wiesen folgende solare Reflektion auf:

| Probe 1 | Probe 2 | Probe 3 |
|---|---|---|
| 83,8% | 84,1% | 85,2% |

Der im Stand der Technik verwendete gebrannte Kaolin hat eine solare Reflektion von etwa 81 - 83 %.

### Beispiel 4: Beschichtung

Die erfindungsgemäßen Partikel wurden dann mit einem fluorhaltigen Polymer (kommerziell erhältlich als "Unidyne TG-8111" der Fa. Daikin Chemicals Ltd.) in Mengen von 0,4 Gew.-%, bezogen auf die Partikel, bzw. 0,6 Gew.-% bezogen auf die Partikel vermischt, wobei das Fluorpolymer vorher im Verhältnis 1:5 mit Wasser verdünnt wurde, um einen besseren Kontakt der Partikeloberfläche mit dem Polymer zu gewährleisten.

Dabei ergab sich folgende solare Reflektion:

| Probe 1 - 0,4% | Probe 2 - 0,4% | Probe 3 - 0,4% |
|---|---|---|
| 81,8% | 83,9% | 84,7% |

| Probe 1 - 0,6% | Probe 2 - 0,6% | Probe 3 - 0,6% |
|---|---|---|
| nicht bestimmt | 83,6% | 84,8% |

Es zeigt sich, dass die Fluorbeschichtung die solare Reflektion nicht wesentlich verschlechtert.

Auch bei 1380°C gebranntes Kaolin kann mit einer derartigen Beschichtung versehen werden. Dabei werden die folgenden Werte der solaren Reflektion erhalten:

| Probe - unbehandelt | Probe 2 - 0,4% | Probe 3 - 0,6% |
|---|---|---|
| 81,9 % | 82,5 % | 82,8 % |

### Beispiel 5: Verfärbungstest

Die Hydrophobie der Oberfläche wird mittels eines Verfärbungstests beurteilt. Dazu werden 5 g des zu beurteilenden Granulats mit 1,2 g Methylrot-Reagenz (hergestellt aus 7 mg Methylrot, CAS Nr. 845-10-3 in 200 ml einer 0,02 molaren Schwefelsäure) und 5 ml destilliertem Wasser innig vermischt, abgenutscht und mit Wasser nachgewaschen. Dort, wo sich keine Hydrophobie ausbilden konnte, ist das Granulat rötlich gefärbt. Dies wird als "failed" beurteilt. Nur dort, wo sich eine Hydrophobie ausbilden konnte, bleibt das Granulat weiß, was als "passed" beurteilt wird.

| Kaolin gebrannt - unbehandelt | Kaolin gebrannt - 0,6 % |
|---|---|
| F | P |

| Probe 1 - 0,4% | Probe 2 - 0,4% | Probe 3 - 0,4% |
|---|---|---|
| P | F | P |

| Probe 1 - 0,6% | Probe 2 - 0,6% | Probe 3 - 0,6% |
|---|---|---|
| nicht bestimmt | P | P |

| | | |
|---|---|---|
| F = failed P = passed | | |

### Beispiel 6: Fixierung

Anschließend wurde untersucht, ob die Partikel fest genug in die Bitumenbeschichtung eingebettet sind. Hierzu wurde zunächst in einer Aluschale eine Menge von etwa 2 g Bitumen auf 200°C erhitzt, um eine glatte Oberfläche zu erzeugen. Auf diese Oberfläche wird dann das Granulat dünn aufgestreut und über vier Tage bei 80°C im Wärmeschrank aufbewahrt. Mittels einer Pinzette werden die einzelnen Granulate nach Abkühlung auf Raumtemperatur entfernt. Beurteilt wird, ob es sich um einen Kohäsionsbruch der Bitumenschicht oder einen Adhäsionsbruch handelt.

| Kaolin gebrannt - unbehandelt | Kaolin gebrannt-0,6 % |
|---|---|
| K | A |

| Probe 1 - 0,4% | Probe 2 - 0,4% | Probe 3 - 0,4% |
|---|---|---|
| A | K | K |

| Probe 1 - 0,6% | Probe 2 - 0,6% | Probe 3 - 0,6% |
|---|---|---|
| A | A | K/A |

| | | |
|---|---|---|
| K = Kohäsionsbruch A = Adhäsionsbruch | | |

Es zeigt sich, dass die Partikel relativ fest in die Bitumenmatrix eingebettet sind. Beim Kohäsionsbruch bricht die Bitumenschicht, bevor der Partikel von der Bitumenschicht abgelöst wird, beim Adhäsionsbruch bleibt die Bitumenschicht unverletzt.

### Beispiel 7: Verschmutzungstest

Figuren 1 und 2 zeigen eine Aufnahme gemäß Beispiel 6 vor der Entfernung der Partikel. Nach dem Abkühlen wurden Fotoaufnahmen getätigt.

Figur 1 zeigt Kaolin gebrannt, unbehandelt (unten) und mit 0,6 Gew.-% Fluorbeschichtung (oben).

Figur 2 zeigt in der oberen Reihe Proben 1, 2 und 3 mit einer 0,4 Gew.-%igen Fluorbeschichtung und in der untere Reihe Proben 1, 2 und 3 mit 0,6 Gew.-% Fluorbeschichtung.

Bei der Probe gemäß Stand der Technik (reines Kaolin gebrannt, unbehandelt) zeigt sich eine deutliche Anhaftung von Bitumen. Bei dem beschichteten, gebrannten Kaolin und bei allen sechs Proben der Figur 2 zeigt sich, dass sich das Bitumen die Oberfläche nicht oder nur gering benetzt, so dass die Partikel solare Reflektion bewirken können.

## Patentansprüche

1. Dachbeschichtung umfassend eine Bitumenschicht mit eingebetteten Partikeln, wobei die Partikel Partikel umfassen, die gebrannte Mischungen von
- 40 bis 70 Gew.-% Tonminerale
- 0 bis 32 Gew.-% kristalline Kieselsäuren
- 28 bis 45 Gew.-% Feldspat
- 0 bis 15 Gew.-% sonstige Zuschlagsstoffe
sind,
wobei die gebrannte Mischung eine offene Porosität von 0 bis 14 Vol.-% aufweist, gemessen nach DIN 993-1.

2. Dachbeschichtung nach Anspruch 1, wobei die sonstigen Zuschlagsstoffe Tonerde (Al₂O₃), Gerüstsilikate, die keine Feldspate sind, Schichtsilikate, die keine Tonminerale sind, umfassen.

3. Dachbeschichtung nach Anspruch 1 oder 2, wobei die Partikel eine Korngröße (d50) von 0,1 bis 3 mm aufweisen.

4. Dachbeschichtung nach einem der Ansprüche 1 bis 3, wobei die Partikel in einer Menge von 0,5 bis 5 kg pro Quadratmeter Dachbeschichtung vorliegen.

5. Dachbeschichtung nach einem der Ansprüche 1 bis 4, wobei die Partikel eine Partikelbeschichtung aufweisen.

6. Dachbeschichtung nach Anspruch 5, wobei die Partikelbeschichtung ausgewählt wird aus siliziumhaltigen Verbindungen, fluorhaltigen Verbindungen, silizium-fluorhaltigen Verbindungen und Mischungen davon.

7. Dachbeschichtung nach einem der Ansprüche 5 oder 6, wobei die Partikelbeschichtung ein fluorhaltiges Polymer enthält.

8. Dachbeschichtung nach Anspruch 7, wobei das fluorhaltige Polymer in einer Menge von 0,1 bis 2,0 Gew.-%, bezogen auf die Partikel vorliegt.

9. Dachbeschichtung nach einem der Ansprüche 7 oder 8, wobei das fluorhaltige Polymer ein thermoplastisches Fluorpolymer ist.

10. Dachbeschichtung nach einem der Ansprüche 7 bis 9, wobei das fluorhaltige Polymer ein fluorisiertes (Meth-)Acrylat oder ein fluoriertes Silikon ist.

11. Dachbeschichtung nach einem der Ansprüche 1 bis 10, wobei die Dachbeschichtung eine solare Reflektion von mindestens 80% aufweist, gemessen nach ASTM Standard C1549.

12. Dachbeschichtung nach einem der Ansprüche 1 bis 11, wobei die Mischung
- 45 bis 65 Gew.-% Tonminerale
- 5 bis 18 Gew.-% kristalline Kieselsäuren
- 28 bis 40 Gew.-% Feldspat
- 0 bis 10 Gew.-% sonstige Zuschlagsstoffe
enthält.

13. Verfahren zur Herstellung von Partikeln umfassend:
a) Brennen einer Mischung von
- 40 bis 70 Gew.-% Tonminerale
- 0 bis 32 Gew.-% kristalline Kieselsäuren
- 28 bis 45 Gew.-% Feldspat
- 0 bis 15 Gew.-% sonstige Zuschlagsstoffe,
wobei die gebrannte Mischung eine offene Porosität von 0 bis 14 Vol.-% aufweist, gemessen nach DIN 993-1.
b) Brechen der Mischung zu Partikeln.

14. Verwendung von Partikeln, die gebrannte Mischungen von
- 40 bis 70 Gew.-% Tonminerale
- 0 bis 32 Gew.-% kristalline Kieselsäuren
- 28 bis 45 Gew.-% Feldspat
- 0 bis 15 Gew.-% sonstige Zuschlagsstoffe
sind,
wobei die gebrannte Mischung eine offene Porosität von 0 bis 14 Vol.-% aufweist, gemessen nach DIN 993-1, zur Einbettung in Bitumen, insbesondere für Dachabdeckungen.

## Claims

1. A roof coating comprising a bitumen layer with embedded particles, wherein said particles comprise particles that are fired mixtures of
- from 40 to 70% by weight clay minerals;
- from 0 to 32% by weight crystalline silicas;
- from 28 to 45% by weight feldspar;
- from 0 to 15% by weight other aggregates;
wherein said fired mixture has an open porosity of 0 to 14% by volume as measured according to DIN 993-1.

2. The roof coating according to claim 1, wherein said other aggregates include alumina (Al₂O₃), tectosilicates other than feldspars, phyllosilicates other than clay minerals.

3. The roof coating according to claim 1 or 2, wherein said particles have a grain size (d50) of 0.1 to 3 mm.

4. The roof coating according to any of claims 1 to 3, wherein said particles are present in an amount of 0.5 to 5 kg per square meter of roof coating.

5. The roof coating according to any of claims 1 to 4, wherein said particles have a particle coating.

6. The roof coating according to claim 5, wherein said particle coating is selected from silicon-containing compounds, fluorine-containing compounds, silicon-fluorine-containing compounds, and mixtures thereof.

7. The roof coating according to either of claims 5 or 6, wherein said particle coating comprises a fluorine-containing polymer.

8. The roof coating according to claim 7, wherein said fluorine-containing polymer is present in an amount of 0.1 to 2.0% by weight, based on the particles.

9. The roof coating according to either of claims 7 or 8, wherein said fluorine-containing polymer is a thermoplastic fluoropolymer.

10. The roof coating according to any of claims 7 to 9, wherein said fluorine-containing polymer is a fluorinated (meth)acrylate or a fluorinated silicone.

11. The roof coating according to any of claims 1 to 10, wherein said roof coating has a solar reflectance of at least 80% as measured according to ASTM Standard C1549.

12. The roof coating according to any of claims 1 to 11, wherein said mixture comprises
- from 45 to 65% by weight clay minerals;
- from 5 to 18% by weight crystalline silicas;
- from 28 to 40% by weight feldspar;
- from 0 to 10% by weight other aggregates.

13. A process for preparing particles, comprising:
a) firing a mixture of
- from 40 to 70% by weight clay minerals;
- from 0 to 32% by weight crystalline silicas;
- from 28 to 45% by weight feldspar;
- from 0 to 15% by weight other aggregates;
wherein said fired mixture has an open porosity of 0 to 14% by volume as measured according to DIN 993-1;
b) crushing the mixture into particles.

14. Use of particles being fired mixtures of
- from 40 to 70% by weight clay minerals;
- from 0 to 32% by weight crystalline silicas;
- from 28 to 45% by weight feldspar;
- from 0 to 15% by weight other aggregates;
wherein said fired mixture has an open porosity of 0 to 14% by volume as measured according to DIN 993-1;
for embedding in bitumen, especially for roof coverings.

## Revendications

1. Revêtement de toiture comprenant une couche de bitume dotée de particules incorporées, dans lequel les particules comprennent des particules qui sont des mélanges calcinés de
- entre 40 et 70 % (m/m) de minéraux argileux
- entre 0 et 32 % (m/m) d'acides siliciques cristallins
- entre 28 et 45 % (m/m) de feldspath
- entre 0 et 15 % (m/m) d'autres granulats
dans lequel le mélange calciné possède une porosité ouverte entre 0 et 14 % (v/v), mesurée d'après DIN 993-1.

2. Revêtement de toiture selon la revendication 1, dans lequel les autres granulats comprennent de l'alumine (Al2O3), des tectosilicates qui ne sont pas des feldspaths, des phyllosilicates qui ne sont pas des minéraux argileux.

3. Revêtement de toiture selon la revendication 1 ou 2, dans lequel les particules possèdent une granulométrie (d50) de 0,1 à 3 mm.

4. Revêtement de toiture selon l'une des revendications 1 à 3, dans lequel les particules sont présentes dans une quantité de 0,5 à 5 kg par mètre carré de revêtement de toiture.

5. Revêtement de toiture selon l'une des revendications 1 à 4, dans lequel les particules comportent un enrobage des particules.

6. Revêtement de toiture selon la revendication 5, dans lequel l'enrobage des particules est sélectionné parmi les composés siliciés, les composés fluorés, les composés fluorosiliciés et les mélanges de ceux-ci.

7. Revêtement de toiture selon l'une des revendications 5 ou 6, dans lequel l'enrobage des particules contient un polymère fluoré.

8. Revêtement de toiture selon la revendication 7, dans lequel le fluoropolymère est présent dans une quantité de 0,1 à 2,0 % (m/m) par rapport aux particules.

9. Revêtement de toiture selon l'une des revendications 7 ou 8, dans lequel le polymère fluoré est un fluoropolymère thermoplastique.

10. Revêtement de toiture selon l'une des revendications 7 à 9, dans lequel le polymère fluoré est un (méth)acrylate fluoré ou un silicone fluoré.

11. Revêtement de toiture selon l'une des revendications 1 à 10, dans lequel le revêtement de toiture possède une réflexion solaire d'au moins 80 %, mesurée d'après la norme ASTM C1549.

12. Revêtement de toiture selon l'une des revendications 1 à 11, dans lequel le mélange contient
- entre 45 et 65 % (m/m) de minéraux argileux
- entre 5 et 18 % (m/m) d'acides siliciques cristallins
- entre 28 et 40 % (m/m) de feldspath
- entre 0 et 10 % (m/m) d'autres granulats.

13. Procédé de synthèse de particules comprenant :
a) calcination d'un mélange de
- entre 40 et 70 % (m/m) de minéraux argileux
- entre 0 et 32 % (m/m) d'acides siliciques cristallins
- entre 28 et 45 % (m/m) de feldspath
- entre 0 et 15 % (m/m) d'autres granulats,
dans lequel le mélange calciné possède une porosité ouverte entre 0 et 14 % (v/v), mesurée d'après DIN 993-1.
b) concassage du mélange en particules.

14. Utilisation de particules, qui sont des mélanges calcinés de
- entre 40 et 70 % (m/m) de minéraux argileux
- entre 0 et 32 % (m/m) d'acides siliciques cristallins
- entre 28 et 45 % (m/m) de feldspath
- entre 0 et 15 % (m/m) d'autres granulats
dans lequel le mélange calciné possède une porosité ouverte entre 0 et 14 % (v/v), mesurée d'après DIN 993-1, pour incorporation dans du bitume, en particulier pour des couvertures de toiture.
